# DEMANDE DE BREVET EUROPEEN

(11) **EP 1 694 033 A1**
(43) Date de publication de la demande: **23.08.2006**
(21) Numéro de dépôt: 06290239.0
(22) Date de dépôt: 10.02.2006
(51) Int. Cl.: H04L 29/08, H04L 29/06, H04M 3/493, G06F 17/30

(54) **Procédé de synchronisation d'un service vocal et d'une présentation visuelle et serveurs vocal et de diffusion associés**

(30) Priorité: 16.02.2005 FR 0501593
(71) Demandeur: FRANCE TELECOM, 75015 Paris (FR)
(72) Inventeur: Lechervy, Yves, 91700 Sainte Geneviève des Bois (FR); Fourre, Hubert, 41400 Saint Julien de Chedon (FR)
(74) Mandataire: Habasque, Etienne J. Jean-François

(57) **Abrégé**

L'invention concerne un procédé de synchronisation d'une information vocale sur un premier terminal (7) et d'une presentation visuelle d'informations sur un second terminal (8),
le premier terminal (7) gérant un canal de communication vocale vers un serveur vocal (2),
le second terminal (8) gérant un canal de communication de données vers un serveur de diffusion de contenus (3), qui comporte les étapes de:
- émission (21) par le serveur vocal (2) vers le serveur de diffusion de contenus (3) d'une requête d'envoi d'une page,
- envoi (25) par le serveur de diffusion de contenus (3) au second terminal (8) de la page,
- émission (27) du serveur de diffusion de contenus (3) vers le serveur vocal (2) d'une information de fin de réception de la page,
- émission (28) de l'information vocale associée à la page par le serveur vocal (2) vers le premier terminal (7).

## Description

La présente invention concerne un procédé de synchronisation d'un service vocal sur un premier terminal et d'une présentation visuelle d'informations sous forme de pages sur un second terminal. Elle concerne également un serveur vocal et un serveur de diffusion de contenus pour la mise en oeuvre du procédé.

Les serveurs vocaux actuellement déployés permettent de vocaliser un texte prédéfini et/ou d'effectuer une navigation purement vocale. Ce sont donc des machines à états qui évoluent en fonction des demandes de l'utilisateur.

Par ailleurs, les terminaux de téléphonie à la norme WAP (Wireless Application Protocol - protocole d'application pour réseau sans fil ; norme maintenue par l'Open Mobile Alliance, ex Wap Forum) sont capables de proposer une navigation classique sur internet par utilisation du clavier ou d'un écran tactile.

Ce pilotage par clavier ou écran tactile est remplaçable par des commandes vocales quand le langage utilisé par le navigateur et les pages consultées est du type « voice XML » ou « SALT » (Speech Application Language Tags - balises pour application vocale).

Par rapport à un terminal à la norme WAP classique, cela a l'inconvénient d'obliger le navigateur du terminal à intégrer un nouveau module d'interprétation pour synchroniser des flux vocaux et des affichages de données.

Ce problème se pose pour tout terminal sur lequel on souhaite une synchronisation de flux vocaux avec des affichages de données, ainsi que dans le cas où cette synchronisation doit s'effectuer avec un premier terminal qui reçoit le flux vocal et un second terminal qui affiche les données.

Le but de l'invention est donc de permettre une synchronisation d'une navigation à travers des pages de données avec des éléments vocaux sans modification des terminaux.

L'objet de l'invention est donc un procédé de synchronisation d'une information vocale sur un premier terminal et d'une présentation visuelle d'informations sous forme de pages sur un second terminal,
le premier terminal gérant un canal de communication vocale vers un serveur vocal,
le second terminal gérant un canal de communication de données vers un serveur de diffusion de contenus, comporte les étapes de :
- émission par le serveur vocal vers le serveur de diffusion de contenus d'une requête d'envoi d'une page,
- envoi par le serveur de diffusion de contenus au second terminal de la page demandée,
- émission du serveur de diffusion de contenus vers le serveur vocal d'une information de fin de réception de la page,
- émission de l'information vocale associée à la page par le serveur vocal vers le premier terminal à la réception de l'information de fin de réception de la page.

D'autres caractéristiques du procédé sont :
- il comporte une émission par le second terminal d'un accusé de réception à destination du serveur de diffusion de contenus avant l'émission par le serveur de diffusion de contenus de l'information de fin de réception de la page,
- l'émission par le second terminal d'un accusé de réception est effectuée par l'envoi par le second terminal au serveur de diffusion de contenus d'une requête de réception d'un élément prédéterminé de la page demandée, cette requête étant apte à signaler la bonne réception de la page demandée par le second terminal ;
- en outre préalablement à l'étape d'envoi de la page demandée au second terminal il comporte les étapes de :
   - envoi du serveur de diffusion de contenus vers le second terminal d'un message contenant en paramètre une adresse de la page à envoyer,
   - envoi en réponse d'une requête de demande de réception de la page du second terminal vers le serveur de diffusion de contenus ;
- l'envoi du serveur de diffusion de contenus vers le second terminal d'un message contenant en paramètre une adresse de la page à envoyer déclenche l'ouverture de la communication de données entre le serveur de diffusion de contenus et le deuxième terminal si celle-ci n'existe pas ;
- il comporte en outre une étape préliminaire d'émission d'une demande de service vocal par le premier terminal auprès du serveur vocal ; et
- les premier et second terminaux sont confondus.

Un autre objet de l'invention est un serveur vocal pour la mise en oeuvre du procédé comportant :
- des moyens de communication vocale avec un terminal gérant un canal de communication vocale, et
- des moyens de communication de données avec un serveur de diffusion de contenus,
- des moyens de génération d'une requête d'envoi d'une page, connectés aux moyens de communication de données pour émission de cette requête vers le serveur de diffusion de contenus, et
- des moyens d'émission d'un service vocal à destination du terminal, par l'intermédiaire des moyens de communication vocale, à la réception d'une commande d'émission reçue du serveur de contenus par l'intermédiaire des moyens de communication de données.

Une caractéristique de ce serveur vocal est que les moyens de génération d'une requête d'envoi sont connectés aux moyens de communication vocale et adaptés pour générer la requête à la réception d'une demande de service vocal en provenance du terminal.

Un autre objet est un serveur de diffusion de contenus pour la mise en oeuvre du procédé comportant :
- des premiers moyens de communication de données avec un terminal de présentation visuelle d'informations sous forme de pages gérant un canal de communication de données, et
- des seconds moyens de communication de données avec un serveur vocal,
- des moyens d'émission d'une page adaptés vers le terminal pour émettre cette page à la réception d'une requête d'envoi de la page en provenance du serveur vocal,
- des moyens de réception d'un accusé de réception émis par le terminal pour indiquer la bonne réception de la page envoyée, et
- des moyens d'envoi d'une requête de diffusion de service vocal vers le serveur vocal par l'intermédiaire des moyens de communication de données, lesdits moyens d'envoi étant adaptés pour n'émettre cette requête qu'après réception de l'accusé de réception émis par le terminal.

Un autre objet est un produit logiciel pour la mise en oeuvre par un ordinateur tel que cet ordinateur fasse office de serveur vocal.

Un autre objet est un produit logiciel pour la mise en oeuvre par un ordinateur tel que cet ordinateur fasse office de serveur de diffusion de contenus.

L'invention sera mieux comprise à la lecture de la description qui va suivre donnée uniquement à titre d'exemple et faite en se référant aux dessins sur lesquels :
- la figure 1 est une vue schématique des éléments utilisés dans un mode de réalisation préféré de l'invention ;
- la figure 2 est un ordinogramme des flux de messages d'un mode de réalisation du procédé selon l'invention,
- la figure 3 est une vue schématique d'un serveur vocal selon un mode de réalisation préféré de l'invention, et
- la figure 4 est une vue schématique d'un serveur de diffusion de contenus selon un mode de réalisation préféré de l'invention.

Un premier mode de réalisation utilisant la norme WAP et un terminal WAP va maintenant être décrit.

On appelle « terminal WAP » un téléphone mobile se conformant à la norme WAP pour requérir et recevoir des pages en provenance d'un serveur Web.

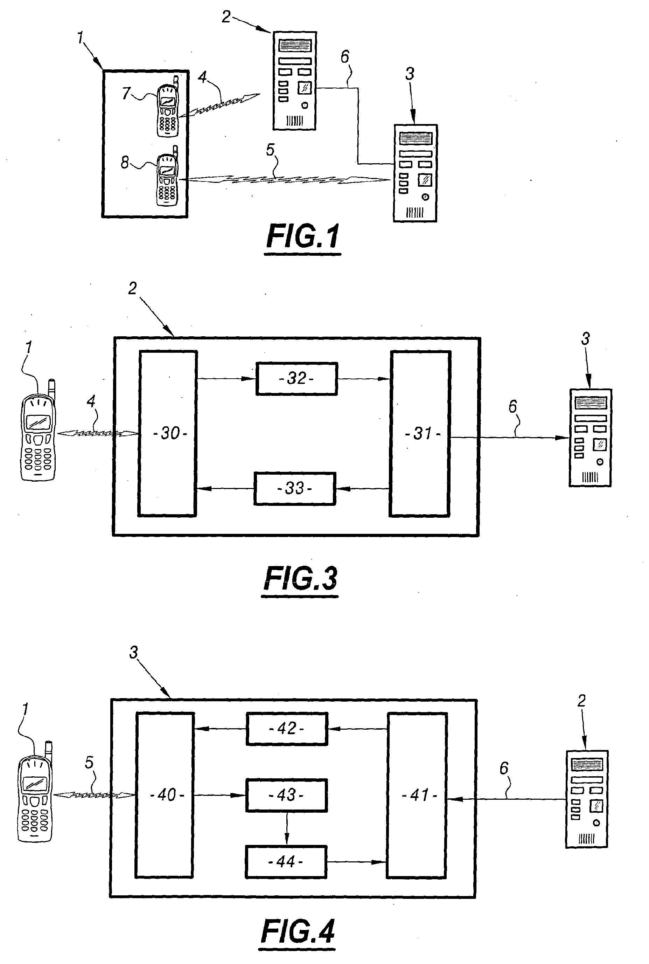

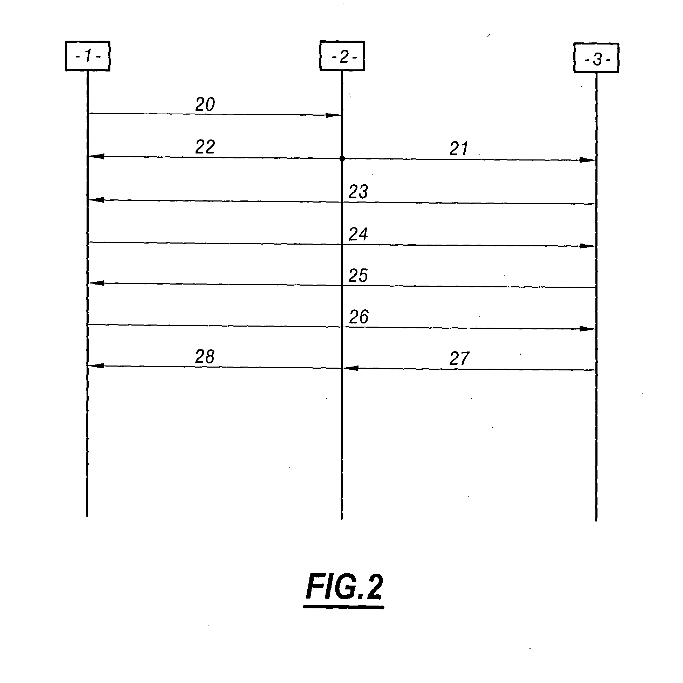

En référence à la figure 1, un terminal 1 à la norme WAP est en communication avec un serveur vocal 2 et un serveur de diffusion de contenus 3 par des liaisons hertziennes 4 et 5. Les deux serveurs 2, 3 sont connectés entre eux par une liaison de données 6 classique par exemple filaire.

Le terminal 1 comporte donc une liaison 4 de type vocale avec le serveur vocal 2 et une liaison 5 de type données avec le serveur de diffusion de contenus 3.

Le serveur vocal 2 est capable, classiquement, d'émettre des messages vocaux préenregistrés, ou créés dynamiquement et d'interpréter un flux de phonèmes émis par l'utilisateur du terminal 1 en une commande à exécuter.

Le serveur de diffusion de contenus 3 est, par exemple, un serveur Web.

Pour la clarté de la description, le serveur vocal 2 et le serveur de diffusion de contenus 3 sont représentés de façon séparée. Cependant, dans un mode de réalisation particulier, ces deux serveurs fonctionnent sur la même machine et la liaison de données 6 s'effectue alors sous forme d'un lien de communication inter-processus.

De même, le terminal 1 est figuré sous la forme de deux terminaux 7 et 8. Le premier terminal 7 est un terminal vocal en relation avec le serveur vocal 2 par la liaison 4 de type vocal et le second terminal 8 est un terminal de présentation de données sous forme de pages en relation avec le serveur de diffusion de contenus 3 par la liaison de données 5. Ainsi, on fait apparaître symboliquement qu'il est superflu de prévoir une liaison entre la partie vocale et la partie de présentation de données.

Un mode de réalisation du procédé va maintenant être décrit en relation avec la figure 2. De façon classique, chaque élément (le terminal 1, le serveur vocal 2, le serveur de diffusion de contenus 3) est représenté par une ligne verticale pleine. Les transferts d'informations sont représentés par des lignes horizontales fléchées pour indiquer le sens du transfert. Le déroulement temporel du procédé se lit de haut en bas de la figure.

A l'étape 20, le terminal 1 émet un appel d'ouverture de service en direction du serveur vocal 2.

A l'étape 21, le serveur vocal 2, en réponse à l'appel d'ouverture de service, émet en direction du serveur de diffusion de contenus 3 une requête d'envoi d'une page correspondant au service demandé.

Optionnellement, et en parallèle, le serveur vocal 2 émet en 22 en direction du terminal 1 un message de bienvenue.

Le serveur de diffusion de contenus 3 ne peut pas envoyer directement la page demandée car la norme WAP, tout comme la norme HTTP, requiert que l'envoi d'une page à un navigateur ne se fasse que sur requête de celui-ci (mode « pull »).

Le serveur de diffusion de contenus 3 émet donc en 23 en direction du terminal 1, un message « WAP Push SL » contenant en paramètre l'URL (Uniform Register Location) d'accès à la page à envoyer.

Ce message « WAP Push SL » fait partie de la norme WAP depuis la version 1.2.1 de celle-ci. Ce message est émis par un serveur en direction d'un terminal afin que ce dernier télécharge immédiatement un contenu dont l'adresse est un paramètre du message et le présente directement à l'utilisateur sans interaction de celui-ci.

A la réception de ce message « WAP Push SL » le terminal 1 émet en 24 une requête de demande de réception de la page dont l'adresse est en paramètre du message « WAP Push SL ». De manière classique, cette requête est basée sur la commande GET du protocole HTTP.

Le serveur de diffusion du contenu 3 envoie en retour, étape 25, la page demandée.

Cette page comporte un élément prédéterminé sous forme, par exemple, d'une image, dont l'adresse de téléchargement se trouve sur le serveur de diffusion de contenus 3. Cet élément prédéterminé est positionné à la fin du fichier de la page demandée, par exemple, juste avant la balise fermante </body> en wml.

Ainsi la requête de demande de réception de l'élément prédéterminé, est effectuée, étape 26, quand le terminal a reçu l'intégralité des éléments de la page demandée.

A la réception de ladite requête du terminal 1, le serveur de diffusion de contenus 3 émet en 27 une commande d'émission du service vocal par le serveur vocal 2.

A la réception de cette commande, le serveur vocal 2 émet en 28 le service vocal à destination du terminal 1.

Ainsi le service vocal est avantageusement synchronisé avec l'affichage des contenus visuels.

Comme constaté à la lecture de la description qui précède, cette synchronisation entre la voix et l'affichage est possible sans modification du terminal 1, celui-ci étant simplement conforme à la norme WAP et capable d'avoir deux canaux de communication ouverts en même temps, l'un pour la voix et l'autre pour les données, autrement dit c'est un terminal WAP bi-modal.

De façon générale, le procédé ainsi décrit peut également être mis en oeuvre avec d'autres technologies que la technologie WAP comme, par exemple, la technologie « i-mode » quand cette technologie offre la possibilité d'envoyer une page de données au terminal sur initiative du serveur de diffusion de contenus.

De même, le terminal 1 peut être décomposé en un premier terminal 7 gérant le canal de communication vocale 4 avec le serveur vocal 2 et un second terminal 8 gérant le canal de communication de données 5 avec le serveur de diffusion de contenus 3.

Le procédé de compose alors, de façon générale, des étapes :
- d'émission par le serveur vocal 2 vers le serveur de diffusion de contenus 3 d'une requête d'envoi d'une page,
- envoi par le serveur de diffusion de contenus 3 au second terminal 8 de la page demandée,
- émission du serveur de diffusion de contenus 3 vers le serveur vocal 2 d'une information de fin de réception de la page, et
- émission de l'information vocale associée à la page par le serveur vocal 2 vers le premier terminal 7 à la réception de l'information de fin de réception de la page.

Concernant le serveur vocal 2, figure 3, il comporte des moyens 30 de communication vocale classiques avec le terminal 1 sous forme d'une liaison vocale, ainsi que des moyens 31 de communication de données classiques avec le serveur de diffusion de contenus 3.

Le serveur vocal 2 comporte de plus des moyens 32 de génération d'une requête d'envoi d'une page, celle-ci étant émise en direction du serveur de diffusion de contenus 3 lors de l'étape 21 de la figure 2. Les moyens 32 de génération sont connectés aux moyens 30 de communication vocale de façon à générer la requête lors de la réception de la demande de service provenant du terminal 1.

Le serveur vocal 2 comporte également des moyens 33 d'émission du service vocal à destination du terminal 1 par l'intermédiaire des moyens 30 de communication vocale. Cette émission est déclenchée à la réception d'une commande d'émission reçue du serveur de diffusion de contenus 3 par l'intermédiaire des moyens 31 de communication de données.

Le serveur de diffusion de contenus 3 comporte des premiers moyens 40 de communication de données aptes à établir une liaison de données avec le terminal 1 et des seconds moyens 41 de communication de données pour établir une liaison de données avec le serveur vocal 2.

Le serveur de diffusion de contenus 3 comporte également des moyens 42 d'émission d'une page vers le terminal 1. Ces moyens 42 d'émission sont reliés aux seconds moyens 41 de communication de données de façon à n'émettre la page qu'à la réception de la requête d'envoi de page provenant du serveur vocal 2.

Le serveur de diffusion de contenus 3 comporte en outre des moyens 43 de réception d'un accusé de réception émis par le terminal 1 pour indiquer la bonne réception de la page envoyée. Un mode particulier de réalisation consiste, comme indiqué précédemment, à faire émettre par le terminal 1 une requête vers un élément prédéterminé lorsque la page est totalement reçue.

Le serveur de diffusion de contenus 3 comporte également des moyens 44 d'envoi d'une requête de diffusion du service vocal. Cette requête est envoyée au serveur vocal 2 par l'intermédiaire des moyens 41 de communication. Ces moyens 44 d'envoi sont adaptés pour n'émettre cette requête qu'après réception de l'accusé de réception émis par le terminal 1.

Le procédé, le serveur vocal et le serveur de diffusion de contenus 3 ainsi décrits sont susceptibles d'être implémentés dans le détail de nombreuses façons.

Par exemple, la gestion des messages « WAP Push SL » peut être déléguée à un serveur autonome. Dans ce cas, le serveur de diffusion de contenus 3 reste un serveur classique répondant à des requêtes HTTP.

De même, on comprend que le serveur vocal 2 et le serveur de diffusion de contenus 3 sont implémentables par logiciel en utilisant des ordinateurs standardisés.

Le procédé décrit permet donc avantageusement de synchroniser un service vocal avec des données affichables sans nécessiter de modification du terminal.

## Revendications

1. Procédé de synchronisation d'une information vocale sur un premier terminal (7) et d'une présentation visuelle d'informations sous forme de pages sur un second terminal (8),
le premier terminal (7) gérant un canal de communication vocale vers un serveur vocal (2),
le second terminal (8) gérant un canal de communication de données vers un serveur de diffusion de contenus (3), **caractérisé en ce qu'**il comporte les étapes de :
- émission (21) par le serveur vocal (2) vers le serveur de diffusion de contenus (3) d'une requête d'envoi d'une page,
- envoi (25) par le serveur de diffusion de contenus (3) au second terminal (8) de la page demandée,
- émission (27) du serveur de diffusion de contenus (3) vers le serveur vocal (2) d'une information de fin de réception de la page,
- émission (28) de l'information vocale associée à la page par le serveur vocal (2) vers le premier terminal (7) à la réception de l'information de fin de réception de la page.

2. Procédé de synchronisation selon la revendication 1, **caractérisé en ce qu'**il comporte une émission (26) par le second terminal (8) d'un accusé de réception à destination du serveur de diffusion de contenus (2) avant l'émission par le serveur de diffusion de contenus (3) de l'information de fin de réception de la page.

3. Procédé selon la revendication 2, **caractérisé en ce que** l'émission par le second terminal (8) d'un accusé de réception est effectuée par l'envoi (26) par le second terminal au serveur de diffusion de contenus (3) d'une requête de réception d'un élément prédéterminé de la page demandée, cette requête étant apte à signaler la bonne réception de la page demandée par le second terminal (8).

4. Procédé selon la revendication 1, 2 ou 3, **caractérisé en ce qu'**il comporte en outre préalablement à l'étape d'envoi (25) de la page demandée au second terminal les étapes de :
- envoi (23) du serveur de diffusion de contenus (3) vers le second terminal (8) d'un message contenant en paramètre une adresse de la page à envoyer,
- envoi (24) en réponse d'une requête de demande de réception de la page du second terminal (1) vers le serveur de diffusion de contenus (3).

5. Procédé selon la revendication 4, **caractérisé en ce que** l'envoi (23) du serveur de diffusion de contenus (3) vers le second terminal (8) d'un message contenant en paramètre une adresse de la page à envoyer déclenche l'ouverture de la communication de données entre le serveur de diffusion de contenus et le deuxième terminal si celle-ci n'existe pas.

6. Procédé selon l'une quelconque des revendications précédentes **caractérisé en ce qu'**il comporte en outre une étape préliminaire d'émission d'une demande de service vocal par le premier terminal auprès du serveur vocal (2).

7. Procédé selon l'une quelconque des revendications précédentes **caractérisé en ce que** les premier et second terminaux sont confondus.

8. Serveur vocal (2) pour la mise en oeuvre du procédé selon l'une quelconque des revendications précédentes, **caractérisé en ce qu'**il comporte :
- des moyens (30) de communication vocale avec un terminal (1) gérant un canal de communication vocale, et
- des moyens (31) de communication de données avec un serveur de diffusion de contenus (3),
- des moyens (32) de génération d'une requête d'envoi d'une page, connectés aux moyens (31) de communication de données pour émission de cette requête vers le serveur de diffusion de contenus (3), et
- des moyens (33) d'émission d'un service vocal à destination du terminal (1), par l'intermédiaire des moyens (30) de communication vocale, à la réception d'une commande d'émission reçue du serveur de contenus (3) par l'intermédiaire des moyens de communication de données.

9. Serveur vocal (2) selon la revendication 8, **caractérisé en ce que** les moyens (32) de génération d'une requête d'envoi sont connectés aux moyens (30) de communication vocale et adaptés pour générer la requête à la réception d'une demande de service vocal en provenance du terminal (1).

10. Serveur de diffusion de contenus pour la mise en oeuvre du procédé selon l'une quelconque des revendications 1 à 7, **caractérisé en ce qu'**il comporte :
- des premiers (40) moyens de communication de données avec un terminal (1) de présentation visuelle d'informations sous forme de pages, ledit terminal gérant un canal de communication de données, et
- des seconds (41) moyens de communication de données avec un serveur vocal (2),
- des moyens (42) d'émission d'une page adaptés vers le terminal (1) pour émettre cette page à la réception d'une requête d'envoi de la page en provenance du serveur vocal (2),
- des moyens (43) de réception d'un accusé de réception émis par le terminal (1) pour indiquer la bonne réception de la page envoyée, et
- des moyens (44) d'envoi d'une requête de diffusion de service vocal vers le serveur vocal (2) par l'intermédiaire des moyens (4) de communication de données, lesdits moyens d'envoi étant adaptés pour n'émettre cette requête qu'après réception de l'accusé de réception émis par le terminal (1).

11. Produit logiciel pour la mise en oeuvre par un ordinateur tel que cet ordinateur fasse office de serveur vocal selon les revendications 8 et 9.

12. Produit logiciel pour la mise en oeuvre par un ordinateur tel que cet ordinateur fasse office de serveur de diffusion de contenus selon la revendication 10.
